Europäisches Patentamt

European Patent Office

Office européen des brevets

(19)

(11) Veröffentlichungsnummer: **0 205 160**
**B1**

(12) **EUROPÄISCHE PATENTSCHRIFT**

(45) Veröffentlichungstag der Patentschrift:
**24.05.89**

(51) Int. Cl.⁴: **F 02 C 7/232**

(21) Anmeldenummer: 86107926.7

(22) Anmeldetag: **10.06.86**

(54) **Ventil für die Brennstoffzufuhrleitung einer Gasturbine.**

(30) Priorität: **13.06.85 DE 3521193**

(43) Veröffentlichungstag der Anmeldung:
**17.12.86 Patentblatt 86/51**

(45) Bekanntmachung des Hinweises auf die Patenterteilung:
**24.05.89 Patentblatt 89/21**

(84) Benannte Vertragsstaaten:
**CH DE FR GB IT LI**

(56) Entgegenhaltungen:
**US-A- 3 339 574**

(73) Patentinhaber: **MTU MOTOREN- UND TURBINEN-UNION MÜNCHEN GMBH, Dachauer
Strasse 665 Postfach 50 06 40, D-8000 München 50 (DE)**

(72) Erfinder: **Greune, Christian, Maisacher Strasse 55,
D-8080 Fürstenfeldbruck (DE)**
Erfinder: **Zotz, Georg, Dachauer Strasse 93,
D-8048 Haimhausen (DE)**

## Beschreibung

Ein dem Oberbegriff des Patentanspruchs 1 zugrunde gelegtes, aus der US-PS-3339574 bekanntes Druckaufbau- und Drainageventil weist als Doppelstutzen ausgebildete, mit Dichtungsringen versehene Leitungsanschlüsse auf, welche für die Brennstoffzufuhr in das Ventil, die Brennstoffabführung aus dem Ventil zur Einspritzdüse der Brennkammer sowie für die Brennstoffdrainage vorgesehen sind. Das bekannte Ventil weist ferner einen Zylinder auf, in dem ein vom Brennstoffzulauf mit Brennstoff beaufschlagbarer und demzufolge vom Brennstoffdruck entgegen der Wirkung einer Feder betätigter, stufenlos ausgebildeter Steuerkolben wechselweise Öffnungen des Zylinders absteuert, von denen die einen bei eingeschalteter Brennstoffzufuhr und damit verbundener Freigabe durch den Steuerkolben die Brennstoffzufuhr zu den Einspritzdüsen ermöglichen und bei abgeschalteter Brennstoffzufuhr unter der durch die Rückstellfeder erfolgenden Bewegungen des Steuerkolbens verschlossen werden, während gleichzeitig damit weitere Bohrungen in dem Zylinder durch die rücklaufende Bewegung des Steuerkolbens freigegeben werden und einen Ablauf des in den Einspritzdüsen verbliebenen Restbrennstoffes in die Drainageleitung ermöglichen.

Im vorliegenden bekannten Fall wird also die dem Steuerkolben des Ventils zugehörige, auf der von der Rückstellfeder abgewandten Seite liegende Kolbenend- oder Meßfläche vom über einen Triebwerksbrennstoffregler zugemessenen Brennstoff beaufschlagt, d.h. der Brennstoffeinspritzdruck ist zugleich Steuerdruck des Ventils zwecks Kolbenverstellung gegen die Rückstellfeder, so daß der Brennstoffeinspritzdruck als Steuerdruck an ein und derselben zuvor genannten Meßstelle wirksam ist.

Hierdurch ist in Notfällen kein extrem rasches, selbständiges Abschalten des Triebwerks möglich, weil der Ventilabsperrvorgang von einer Absenkung des Brennstoffeinspritzdruckes in der Brennstoffzumeßeinrichtung abhängig ist.

Beim aus der US-PS-3339574 bekannten Ventil ist ferner der stets an die Brennstoffdüsen angeschlossene Ringraum zwischen dem Ventilzylinder und einem auf diesen aufgesetzten Außengehäuse ausgebildet. Dabei enthält die den Ringraum innen eingrenzende Partie des Ventilzylinders die Brennstoffzumeßbohrungen, denen axial versetzt dahinter erste und zweite Drainagebohrungen folgen, von denen die ersten in der ersten Kolbenendstellung bzw. Absperrstellung der Brennstoffzumeßbohrungen gegen eine weitere Ringkammer geöffnet sind, welche zwischen einer koaxialen Außenausnehmung des Kolbens und der angrenzenden Wand des Ventilzylinders ausgebildet ist. Die weitere Ringkammer ist über die zweiten Drainagebohrungen an einen Ringkanal angeschlossen, der mit der Drainageleitung kommuniziert und der zwischen einer koaxialen Außenausnehmung am Ventilzylinder und einem diese abdeckenden Wandabschnitt des Außengehäuses ausgebildet ist.

In der angegebenen Brennstoffabsperr- bzw. Drainagestellung des Ventils sind also die für eine wirksame Ventilfunktion wesentlichen und vergleichsweise sensiblen Bauteile und -elemente stets dem vergleichsweise hochtemperaturigen Drainagebrennstofffluß ausgesetzt. Daraus resultiert zum einen eine vergleichsweise frühzeitig zu erwartende Verkokungsgefahr der Brennstoffzumeß- und Dreinagebohrungen sowie zum anderen eine frühzeitige Verschleißgefahr der betreffenden Kolbendichtungen, wobei zudem die Gefahr einer Kolbenverklemmung im Ventilzylinder besteht, da wesentliche Kolbenführungsflächen ebenfalls relativ hohen Temperaturen aus dem Drainagebrennstofffluß ausgesetzt sind.

Ferner sind beim vorliegenden bekannten Ventil mechanische Dichtungsschäden insofern nicht auszuschließen, als betreffende kolbenringartige Dichtungen des Steuerkolbens bei Ventilbetätigung die genannten Drainagebohrungen überfahren müssen.

Im Wege einer beim bekannten Ventil als Endanschlag ausgebildeten, stirnseitigen Zentraldichtscheibe dürfte ferner nur ein höchst unzureichender Dichteffekt gewährleistet sein, da Fluchtungsfehler nicht ausgeglichen werden.

Der Erfindung liegt die Aufgabe zugrunde, die zu Bekanntem vorgetragenen Nachteile zu beseitigen und ein Druckaufbau-, Drainage- und Absperrventil zu schaffen, das bei vergleichsweise hoher Betriebssicherheit extrem rasche Steuerfunktionen, insbesondere hinsichtlich eines raschen Triebwerksabschaltvorgangs im Notfalle, ermöglicht.

Die gestellte Aufgabe ist mit den Merkmalen des Kennzeichnungsteils des Patentanspruchs 1 erfindungsgemäß gelöst.

Die Erfindung ermöglicht unter anderem eine hinsichtlich der thermischen und mechanischen Anforderungen «saubere» Funktionstrennung im Wege der beiden Steuerkolben. Der erste Steuerkolben steuert die Brennstoffzufuhr; der zweite Steuerkolben ist zentrales Führungsmittel für die beim Abschalten des Triebwerks aus den Brennstoffeinspritzdüsen in die Drainageleitung abfließenden Brennstoffreste.

In der gemeinsamen ersten Endstellung beider Steuerkolben (Drainagestellung) kann somit der heiße Restbrennstoff ohne Kontaktierung insbesondere der für die Steuerung des Brennstoffes verantwortlichen Partien (Zuströmschlitze) des ersten Steuerkolbens über die Ringkammer und den zweiten Steuerkolben, also über unempfindliche Teile nach der Drainage abfließen. Die ausgestaltungsgemäß vorgesehene Ventiltellerkonfiguration ist dabei nicht nur ein Anschlagmittel am Ventilgehäuse, sondern auch vorteilhaftes Absperr- und Abschirmmittel des heißen Brennstoffrestflusses gegenüber dem die Brennstoffschlitze enthaltenden Teil des ersten Steuerkolbens.

Ein weiterer wesentlicher Vorteil gegenüber Bekanntem besteht darin, daß der Systemdruckaufbau nicht durch den zum Triebwerk fließenden Brennstoff bestimmt wird, sondern eine separate Meßfläche diesen Druck steuert.

Es kann also – ohne den Brennstoffeinspritzdruck absenken zu müssen – ein extrem rascher Triebwerksabschaltvorgang, z.B. über ein später noch näher erläutertes Magnetventil, in die Wege geleitet werden.

Weitere vorteilhafte Ausgestaltungen des Erfindungsgegenstandes ergeben sich aus den Patentansprüchen 2 bis 21.

In den Zeichnungen ist die Erfindung beispielsweise weiter erläutert; es zeigen:

Fig. 1 ein Steuerschema der Erfindung nebst schematisch wiedergegebenem Druckhalte-, Drainage- und Absperrventil;

Fig. 2 einen Längsschnitt des detailliert wiedergegebenen Druckaufbau-, Drainage- und Absperrventils, worin die untere Hälfte eine erste Endstellung beider Steuerkolben (Brennstoffzufuhr abgesperrt, Drainage offen) und die obere Hälfte eine zweite Enstellung beider Steuerkolben (Brennstoffzufuhr offen, Drainagedurchströmquerschnitte abgesperrt) verdeutlicht;

Fig. 3 einen Ventilausschnitt gemäß A–A der Fig. 2;

Fig. 4 eine gemäß Blickrichtung y verdeutlichte Teilansicht eines Brennstoffzuströmschlitzes;

Fig. 5 das Ansteuerschema nach Fig. 1, hier jedoch in Verbindung mit dem in Details näher verdeutlichten, als Längsschnitt dargestellten Differenzdruckventil, und

Fig. 6 ein den qualitativen Druckverlauf im Rahmen der vorgegebenen Beziehung zwischen $P_x$, $P_z$ und $P_{11}$ über dem Ventil (Kolben-)-Hub verdeutlichendes Diagramm.

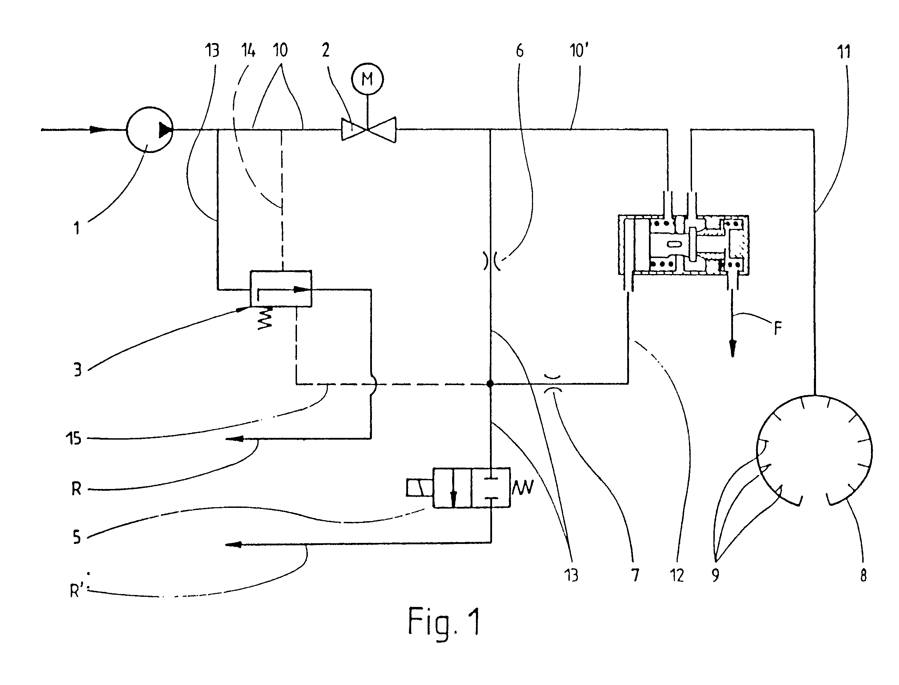

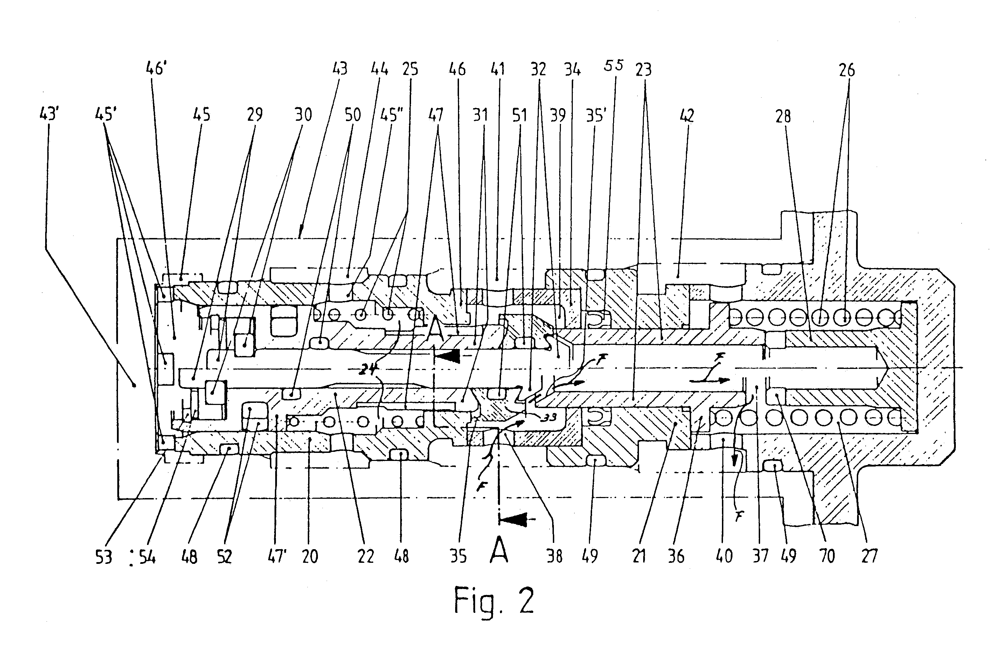

Fig. 1 verkörpert ein mit dem in Fig. 2 bis 4 näher erläuterten Druckaufbau-, Drainage- und Absperrventil – später kurz «Ventil» genannt – zusammenwirkendes Ansteuerschema.

Darin ist mit 1 eine Brennstoffpumpe, mit 2 z.B. eine motorisch (M) gesteuerte Brennstoffzumeßeinheit, mit 3 ein Differenzdruckventil, mit 5 ein elektromagnetisch betätigtes Abschaltventil, mit 6 eine erste Drossel oder Blende, mit 7 eine zweite Drossel oder Blende, mit 8 eine schematisch dargestellte Brennkammer eines Gasturbinentriebwerkes bezeichnet, deren Brennstoffeinspritzmittel bzw. -düsen durch das Bezugszeichen 9 verdeutlicht sind.

Gemäß Fig. 1 kann die im Betrieb benötigte Brennstoffmenge von der Brennstoffpumpe 1 über eine Brennstoffversorgungsleitung 10 der Brennstoffzumeßeinheit 2 und von dort über eine Brennstoffzumeßleitung 10' dem Ventil zugeführt werden, wobei diese Brennstoffzumeßleitung 10' in einen Verteilerraum 44 des Ventils (Fig. 2) einmündet.

Eine Brennstoffversorgungsleitung 11 verbindet einen Verteilerraum 41 (Fig. 2) des Ventils mit den Brennstoffdüsen 9 in der Brennkammer 8.

Die Brennstoffversorgungsleitung 11 ist als Folge des beim Abstellen ventilseitig freigelegten Drainageflusses F (Fig. 2) Rückflußleitung für den düsenseitig unverbrauchten Brennstoff, der über das Ventil und einen zugehörigen Verteilerraum 42 in eine Drainageleitung abfließen kann.

Als ein unwesentlicher Unterschied zu Bekanntem erfolgt beim erfindungsgemäßen Ventil die Kolbendruckbeaufschlagung und Brennstoffzumessung nicht an der gleichen Meßfläche (vordere Kolbenstirnfläche) als Funktion des vorhandenen Brennstoffsystemdruckes; vielmehr erfolgt die Kolbenbetätigung nach einer vorgegebenen Beziehung zwischen $P_x$, $P_z$ und dem Druck in der Brennstoffversorgungsleitung 11, worin $P_z$ der Einspritzdruck und $P_x$ der Steuerdruck des Ventils ist, der getrennt von der seitlichen Brennstoffzumessung 10', 44, 45'', 47 des Ventils an separater Stelle (Gehäusekammer 46' – Fig. 2) auf die eine Kolbenfläche des ersten Steuerkolbens 22 (Fig. 2) aufgebracht wird.

Der Ventilsteuerdruck $P_x$ ist über die zum Ventileingang geführte, in den Verteilerraum 45 (Fig. 2) einmündende Steuerdruckleitung 12 in der Gehäusekammer 46' wirksam.

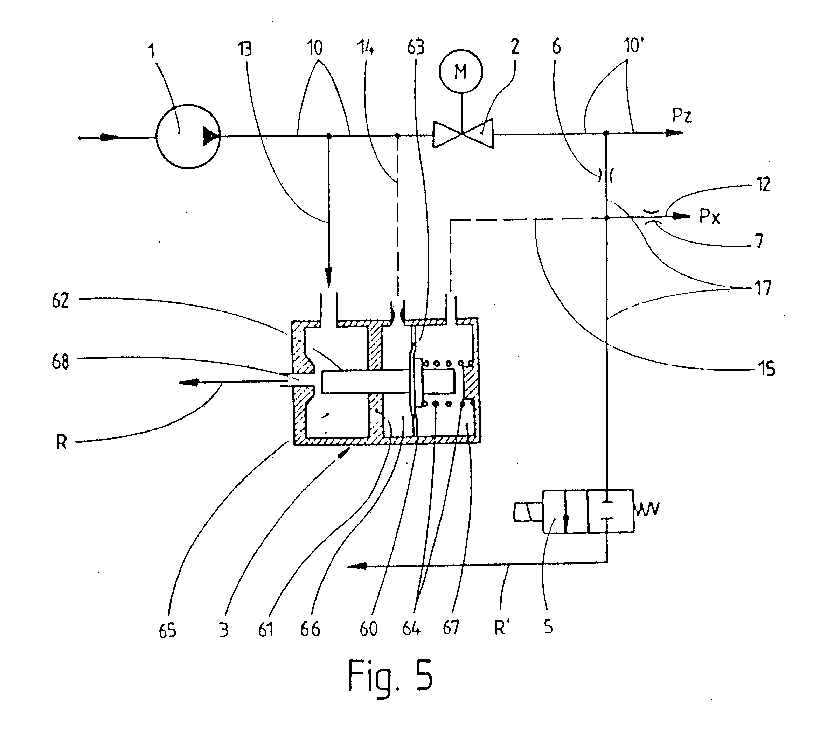

Das zuvor schon erwähnte und in Fig. 5 noch näher behandelte Differenzdruckventil 3 ist dabei im Wege der Leitungen 14, 15 derart in das Steuerschema integriert, daß es über die motorisch gesteuerte Brennstoffzumeßeinheit 2 einen konstanten Druckabfall ermöglicht.

Pfeil R in Fig. 1 kennzeichnet den Rückfluß aus dem Differenzdruckventil 3 abgesteuerter Brennstoffanteile; das gleiche gilt sinngemäß bezüglich R' aus dem elektromagnetischen Absperrventil 5, das über eine Leitung 13, in die die eine Drossel bzw. Blende 6 eingebaut ist, zwischen dem Austritt der Brennstoffzumeßeinheit 2 und dem Ventileintritt an die Brennstoffzumeßleitung 10' angeschlossen ist.

Für das Abstellen des Triebwerks ergeben sich folgende zwei Möglichkeiten:

1. Der Motor M schließt den Öffnungsquerschnitt der Brennstoffzumeßeinheit 2 und die Brennstoffversorgung über das Ventil zu den Einspritzdüsen 9 wird unterbrochen (normaler Abstellvorgang). Als Folge der mit der Brennstoffabsperrung durch das Ventil einhergehenden gleichzeitigen Druckabsenkung $P_x$, $P_z$ öffnet das Differenzdruckventil 3, um den darin befindlichen Restbrennstoff R über die Bohrung 68 (Fig. 5) in den Takt abfließen lassen zu können.

2. Das elektromagnetische Abschaltventil 5 öffnet, wodurch der Druck nach der Drossel bzw. Blende 6 abgesenkt wird. Der Steuerdruck $P_x$ am Ventil (Druckaufbau-, Drainage- und Absperrventil) wird ebenfalls abgesenkt bzw. sinkt unter einen vorgegebenen Öffnungsdruck ab, und dieses Ventil sperrt die Brennstoffzufuhr zur Brennstoffversorgungsleitung 11 nach den Einspritzdüsen 9 ab; dabei öffnet das Differenzdruckventil 3 ($\Delta_p$-Ventil) die Bohrung 68 (Fig. 5) und führt den Brennstoff, der von der Pumpe 1 laufend weiter gefördert wird, gemäß R in den Tank zurück. Bei Öffnung des Abschaltventils 5 fließt sofort ebenfalls überschüssiger Brennstoff R' in den Tank ab. Es ist so ein äußerst rasches Abstellen des Triebwerks und damit einhergehendes Drainieren (Drainagefluß F – Fig. 1) möglich.

Durch den Einbau der Blende 7 oder Drossel in die Steuerdruckleitung 12 ist eine einfache Dämpfungsmöglichkeit für das Ventil geschaffen.

Nachstehend sind Aufbau und Funktion des zuvor lediglich grundsätzlich erörterten Ventils (Druckaufbau-, Drainage- und Absperrventil) im Rahmen der Fig. 2, 3 und 4 näher erläutert.

Dieses Ventil besteht aus zwei in Achsrichtung zusammengefügten zylindrischen Gehäusekörpern, nämlich einem vorderen, 20 und einem hinteren Gehäusekörper 21, die mit entsprechenden inneren zylindrischen Kolbenführungsflächen ausgestattet sind. In die Gehäusekörper 20, 21 sind ein erster Steuerkolben 22 und ein zweiter Steuerkolben 23 axial verschiebbar eingesetzt.

Innerhalb eines zwischen dem vorderen Gehäusekörper 20 und dem ersten Steuerkolben 22 eingeschlossenen Ringraums 24 ist eine erste als Schraubenfeder ausgebildete Rückstellfeder 25 angeordnet; eine zweite ebenfalls als Schraubenfeder ausgebildete Rückstellfeder 26 befindet sich innerhalb eines stromabwärtigen Ringraums 27, der zwischen dem zylindrisch vorspringenden Ende des zweiten Steuerkolbens 23 und der in axialer Richtung auskragenden Zylinderwand einer Kolbenanschlagbuchse 28 auf der einen Seite und der zylindrischen Innenwand des hinteren Gehäusekörpers 21 auf der anderen Seite ausgebildet ist.

Der erste Steuerkolben 22 sitzt ferner auf einer Zentralwelle 29, die mittels einer darin eingelassenen Halbscheibe 30 gegenüber dem nach vorn offenen Stirnende des ersten Steuerkolbens 22 eine Mitnehmerverbindung herstellt.

Am stromabwärtigen Ende ist der erste Steuerkolben 22 mit einem konisch nach innen gegen die Welle 29 eingezogenen Endteil 31 ausgestattet. Die Welle 29 weist an deren stromabwärtigen Ende eine rotationssymmetrisch sich in Ventilachsrichtung verjüngendes Endstück 32 mit dementsprechend kegelförmiger Ventilfläche auf. Dieses Endstück 32 ist auf der anderen Seite rotationssymmetrisch kegelförmig eingezogen ausgebildet. Ein auf der Welle 29 verdrehbar angeordneter Ventilteller 33 – zwischen dem Endteil 31 und dem Endstück 32 – weist mit letzteren korrespondierende Kegelgegenflächen als Mitnehmerverbidung bei Betätigung des ersten Steuerkolbens 22 auf. Auf diese Weise ist der Ventilteller 33 selbstjustierend angeordnet bzw. als Folge von Sitzfluchtungsfehlern die letzteren kompensierend verdrehbar.

Wie ferner auf Fig. 2 erkennbar, ist der zweite Steuerkolben 23 innerhalb des zugehörigen Gehäusekörpers 21 axial verschieblich geführt und durchragt radial abgekröpftes Buchsenendteil 34 des anderen bzw. vorderen Gehäusekörpers 20.

Der als Hohlzylinder ausgebildete zweite Steuerkolben 23 weist am stromaufwärtig offenen Ende eine rotationssymmetrische Kegelmantelfläche 35' auf, die zur korrespondierenden Kegelfläche des Endstücks 32 der Welle 29 in der Ventilruhe- bzw. ersten Kolbenendstellung in einem vorgegebenen Abstand (Drainagefluß F offen) angeordnet ist.

Die obere Zeichnungshälfte verkörpert die Drainageflußabsperrstellung, in der der Ventilteller 33 über den ersten Steuerkolben 22 gegen die vordere Stirnkante des zweiten Steuerkolbens 23 gedrückt wird bzw. an diesem aufsitzt.

Neben der besagten Drainagefreilegungs- oder -absperr- bzw. Dichtfunktion kommt dem Ventilteller 33 u.a. die Aufgabe zu, die vorgegebene Ruhestellung des ersten Steuerkolbens 22 infolge federgestützten Anschlags gegen einen örtlichen Vorsprung 35 des vorderen Gehäusekörpers 20 sicherzustellen.

Gemäß unterer Hälfte der Patentzeichnung (Fig. 2) sitzt der zweite Steuerkolben 23 im Wege eines radial vorstehenden Absatzes 36, unterstützt von der Vorspannkraft der Rückstellfeder 26, an einem radial nach innen vorspringenden Teil des hinteren Gehäusekörpers 21 auf. In dieser Ausgangs- oder Ruhestellung des zweiten Steuerkolbens 23 ist ein vorgegebener Abströmquerschnitt 37 – zwischen dem hinteren Stirnende des zweiten Steuerkolbens 23 und dem vorderen Stirnende der Kolbenanschlagbuchse 28 – für den Drainageabfluß F in den Ringraum 27 freigelegt.

Wie ferner aus Fig. 2 erkennbar, weist das Buchsenendteil 34 des vorderen Gehäusekörpers 20 mehrere gleichförmig über dem Umfang verteilte Bohrungen 38 auf, die mit einer vom Buchsenendteil 34 gegenüber dem Ventilteller 33 und dem stromaufwärtigen Endabschnitt des zweiten Steuerkolbens 23 eingeschlossenen Ringkammer 39 kommunizieren.

Ebenso weist dann auch der hintere Gehäusekörper 21 mehrere gleichförmig über dem Umfang verteilte Bohrungen 40 auf, die mit dem die andere Rückstellfeder 26 enthaltenden Ringraum 27 kommunizieren.

Die Bohrungen 38 und 40 kommunizieren ihrerseits wiederum mit ringförmigen Verteilerräumen 41, 42, die u.a. durch Aufschieben eines gemeinsamen Außengehäusekörpers 43 auf die Gehäusekörper 20, 21 bereitgestellt werden.

Es ist also der Verteilerraum 41 über die Brennstoffversorgungsleitung 11 (Fig. 1) mit den Brennstoffdüsen 9 in der Brennkammer 8 verbunden, während der Verteilerraum 42 mit der Drainageleitung verbunden ist.

Bei gemäß unterer Hälfte der Fig. 2 verkörperter, erster Endstellung beider Steuerkolben 22, 23, die auch als Drainageendstellung zu bezeichnen wäre, kann also nicht verbrauchter Brennstoff von den Brennstoffdüsen 9 (Fig. 1) über die Brennstoffversorgungsleitung 11 und das Ventil gemäß Pfeilfolge F der Drainageleitung zugeführt werden.

Mit dem vorderen Gehäusekörper 20 schließt der gemeinsame Außengehäusekörper 43 zwei weitere ringförmige Verteilerräume 44, 45 ein.

Im Wege eines das Ventil an dessen Frontseite abdeckenden Gehäusedeckels 43' kommuniziert der besagte Verteilerraum 45, der über die Leitung 12 (Fig. 1) an den Ventilsteuerdruck $P_x$ angeschlossen ist, über im ersten Gehäusekörper 20 enthaltene, gleichförmig über den Umfang verteilte Endausnehmungen 45' mit der stirnseitigen Gehäusekammer 46', in welche die stromaufwärtig angeordneten Stirnflächen des ersten Steuerkolbens 22 als Systemdruckangriffsflächen auskragen.

Der Verteilerraum 44 ist über mehrere gleichförmig untereinander beabstandete Brennstoffzuströmbohrungen 45" mit dem Ringraum 24 verbunden, in welchem sich die erste Rückstellungsfeder 25 in Längsrichtung erstreckt und dabei zwischen einem radial nach innen vorspringenden Führungsabsatzstück 46 des vorderen Gehäusekörpers 20 und einem Endabschnitt 47' des ersten Steuerkolbens 22 abstützt. In der ersten Kolbenendstellung (untere Hälfte der Fig. 2) wird also der erste Steuerkolben 22 aufgrund der der ersten Rückstellfeder 25 innewohnenden Vorspannkraft über den Ventilteller 33 gegen den Gehäusevorsprung 35 als Anschlag gedrückt.

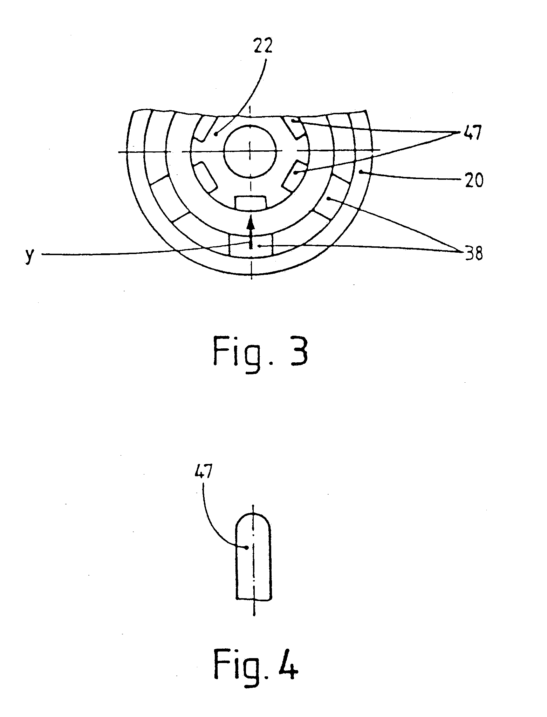

Wie insbesondere aus Fig. 3 ersichtlich, weist der erste Steuerkolben 22 aus gleichförmig über dem Umfang verteilten Längsaussparungen gebildete Brennstoffzuströmschlitze 47 auf, die, stets mit dem Ringraum 24 kommunizierend, in der ersten Kolbenendstellung über das Endteil 31 des ersten Steuerkolbens 22 und an diese angrenzende zylindrische Führungsflächen des Führungsabsatzstückes 46 abgesperrt sind.

In genauer Interpretation des Erfindungsgedankens wird der erste Steuerkolben 22 vom Steuerdruck $P_x$ in einer ersten Phase allein gegen die Kraft der ersten Rückstellfeder 25 soweit nach rechts verschoben, daß der Ventilteller 33 den Drainagefluß F absperrt, wobei die Brennstoffzuströmschlitze 47 noch nicht zur Ringkammer 39 hin geöffnet sind.

Erst in der Folge einer in Phase 2 gemeinsam (nach rechts gerichteten) Verstellbewegung des ersten und des zweiten Steuerkolbens 22, 23 auch gegen die Rückstellkraft der zweiten Schraubenfeder 26 – und dabei stets abgesperrtem Drainagefluß F – werden auch die Zuströmschlitze 47 zur Ringkammer 39 hin geöffnet, die den größten gemeinsamen Durchströmungsquerschnitt erst dann bereitstellen, wenn die hintere Endfläche des zweiten Steuerkolbens 23 an der korrespondierenden Gegenfläche der Kolbenanschlagbuchse 28 aufsitzt.

In der beschriebenen Phase 2 setzt also die Brennstoffzumessung (über 44, 45", 24, 47, 39, 38, 41) in die Brennstoffversorgungsleitung 11 und zu den Brennstoffdüsen 9 erst ein, wenn im Wege der gemeinsamen Kolbenverstellbewegung das Endteil 31 des ersten Steuerkolbens 22 aus dem Führungsabsatzstück 46 auszufahren beginnt.

Beim Abschalten des Triebwerks und damit verbundenem sofortigem Druckabfall des Ventilsteuerdrucks $P_x$, d.h. $P_x < P_z$, werden als Folge gemeinsamer Rückstellbewegung des ersten und zweiten federbelasteten Steuerkolbens 22 und 23 die Brennstoffzuströmschlitze 47 zuerst verschlossen, und erst hiernach, jedoch mit extrem zeitlich kurzer Verzögerung, wird der brennstoffdüsenseitige Drainagefluß F unter alleiniger Rückstellkraft der Rückstellfeder 25 auf den ersten Steuerkolben 22 freigegeben.

Auf diese Weise gelingt es u.a., daß sofort mit Abschalten des Triebwerks die von den Brennstoffdüsen nicht verbrauchten Brennstoffanteile raschest möglich drainiert werden können.

Das geschilderte, beim Abschalten des Triebwerks zeitlich vorverlegte Absperren der Brennstoffzuströmquerschnitte 47 wie aber auch deren örtliche Position gegenüber der Kammer 39 hat u.a. den weiteren wesentlichen Vorteil, daß von den Düsen 9 zurückfließende, vergleichsweise heiße Brennstoffreste in keinerlei Berührung mit den Brennstoffzuströmschlitzen 47 kommen können, so daß keine Verkokungsgefahr u.a. entlang der vergleichsweise in dieser Hinsicht sehr empfindlich reagierenden Schlitzkanten zu erwarten ist.

Mit 48 bzw. 49 sind in Fig. 2 ferner geeignete Dichtringe zwischen dem Außengehäusekörper 43 und vorderem Ventilgehäusekörper 20 einerseits bzw. hinterem Gehäusekörper 21 andererseits bezeichnet.

Mit der betreffenden Kolbenbewegung zwangsgeführte weitere innere Dichtringe sind mit 50 und 51 bezeichnet, von denen der eine, 50, am sowie zwischen erstem Steuerkolben 22 und Welle 29, der andere, 51, am sowie zwischen dem Ventilteller 33 und der Welle 29 angeordnet ist.

Ein in eine Umfangsnut des ersten Steuerkolbens 22 eingesetztes weiteres Dichtungspaar 52 dichtet die Gehäusekammern 46', 24 gegeneinander ab.

Mit 53 sind in Fig. 2 ferner ein Sicherungsblech, mit 54 eine Abstimmscheibe bezeichnet, die beide als Bestandteile des ersten Steuerkolbens 22 (29) bei dessen Betätigung mitbewegt werden.

55 stellt in Fig. 2 ein hier z.B. ring- und gabelförmiges Dichtelement dar, das innerhalb eines Ringraums zwischen hinterem Gehäusekörper 21, zweitem Steuerkolben 23 und dem radial nach innen auskragenden Buchsenendteil 34 des vorderen Gehäusekörpers 20 angeordnet ist.

In knapper Zusammenfassung ergibt sich folgende Funktionsweise des zuvor in Fig. 2, 3 und 4 detailliert behandelten Druckaufbau-, Drainageund Absperrventils:

Absperr- und Drainagefunktion:
Ohne Druck in der Zuleitung 12 liegt der Ventilteller 33 auf dem linken Sitz (Anschlag 35) an, und das Ventil (Schlitze 47) kann nicht durchströmt werden. Gleichzeitig ist der Ventilausgang mit der Drainage F verbunden.

Druckaufbau ($P_x = P_z$)
Mit steigendem Steuerdruck $P_x$ in der Zuleitung 12 wandert der erste Steuerkolben 22 gegen die Kraft der Feder 25 nach rechts, und der Ventilteller 33 liegt auf dem rechten Sitz, also am zweiten Steuerkolben 23 an. Damit ist die Drainage geschlossen. Mit weiter steigendem Druck $P_x$ in der Zuleitung 12 werden beide Steuerkolben 22, 23 gegen die Kraft der beiden Federn 25, 26 nach rechts bewegt, und das Ventil (Schlitze 47) wird geöffnet.

Der notwendige Druckaufbau erfolgt über die Durchströmmenge und Öffnungsfläche des Ventils entsprechend der Zuordnung von Federkennlinie und wirksamer Kolbenfläche. Die maximale Öffnungsfläche der Schlitze 47 ist erreicht, wenn der zweite Steuerkolben 23 an der Stirnfläche der Kolbenanschlagbuchse 28 anliegt.

Abstellen (Px<Pz)

Zum Abstellen des Triebwerks wird der Steuerdruck Px abgesenkt. Dadurch bewegt sich u.a. der erste Steuerkolben 22 nach links, das Ventil schließt, und der Ventilteller 33 liegt auf dem linken Sitz (Anschlag 35) auf. Gleichzeitig wird der Ventilausgang mit der Drainage F verbunden (Drainagefuß F).

In Fig. 5 sind Aufbau und Wirkungsweise des zu Fig. 1 schon erwähnten Differenzdruckventils 3 ($\Delta$p-Ventils) näher erläutert.

Das Differenzdruckventil 3 besteht aus einem zylindrischen Ventilgehäuse 60 mit einer Querwand 61, in der ein Kolben 62 axial beweglich geführt angeordnet ist. Auf der rechten Seite der Querwand 61 ist der Kolben 62 über eine drucksensibel reagierende Membran 63 am Ventilgehäuse 60 aufgehängt. Die Membran 63 wird mittels einer Schraubenfeder 64 im Gleichgewicht gehalten, die einerseits über das rechte Kolbenende gestülpt und andererseits am rechten Deckel des Gehäuses 60 anliegend gehalten ist. Entsprechend der Anordnung von Querwand 61 und Membran 63 enthält das Ventilgehäuse 60 drei voneinander getrennte Zylinderkammern 65, 66, 67. Der linke Gehäusedeckel des Differenzdruckventils 3 weist eine zentrale Bohrung 68 auf, die zur bedarfsweisen Abführung nicht benötigter Brennstoffrestmengen R in den Tank ausgebildet ist. Das Differenzdruckventil 3 wird also aus der Druckdifferenz $\Delta$p zwischen dem vor der Membran 63 im Zylinderraum 66 herrschenden Förderdruck aus Leitung 14 und dem hinter der Membran 63 im Zylinderraum 67 herrschenden, über die Leitung 15 zugeführten Druck betätigt. Die Bohrung 68 wird vom Steuerkolben 62 dann verschlossen, wenn die Kraft der Rückstellfeder 64 nebst Druck aus der Leitung 15 den Druck im Zylinderraum 66 übersteigt.

Ein im Hinblick auf die zuvor schon erwähnten Abschaltvorgänge des Triebwerks über die Leitung 15 registrierter Druckabfall im Zylinderraum 67 bringt die Membran 63 wieder in die Gleichgewichtslage gemäß Fig. 5, so daß gemäß zuerst genanntem Abschaltnormalfall (über 2) überschüssige Brennstoffmengen aus dem Differenzdruckventil 3 gemäß R in den Tank zurückfließen können; im zweiten Abschaltfall (über 5) kann Brennstoff über die Pumpe 1 nach 13, 65, 68 und gemäß Pfeil R aus dem Differenzdruckventil 3 in den Tank stets zurückgefördert werden, wobei übriger Systembrennstoff über 5 gemäß R' in den Tank zurückfließt.

Das Differenzdruckventil 3 ermöglicht also über die Zumeßeinheit 2 einen konstanten Druckabfall.

Ergänzend wäre noch zu vermerken, daß die Anschlagbuchse 28 (Fig. 2) des Druckaufbau-, Drainage- und Absperrventils am Kolbenanschlagende mehrere, hier z.B. vier nach vorn offene, gleichförmig über dem Umfang verteilt angeordnete, jeweils gleich große, verhältnismäßig kleine Aussparungen 70 aufweist, über welche auch im gemäß oberer Zeichnungshälfte abgesperrtem Zustand des Durchströmquerschnitts 37 eine Brennstofffleckverbindung über den zweiten Steuerkolben 23 und die Anschlagbuchse 28 nach der Drainageleitung bestehen bleiben kann.

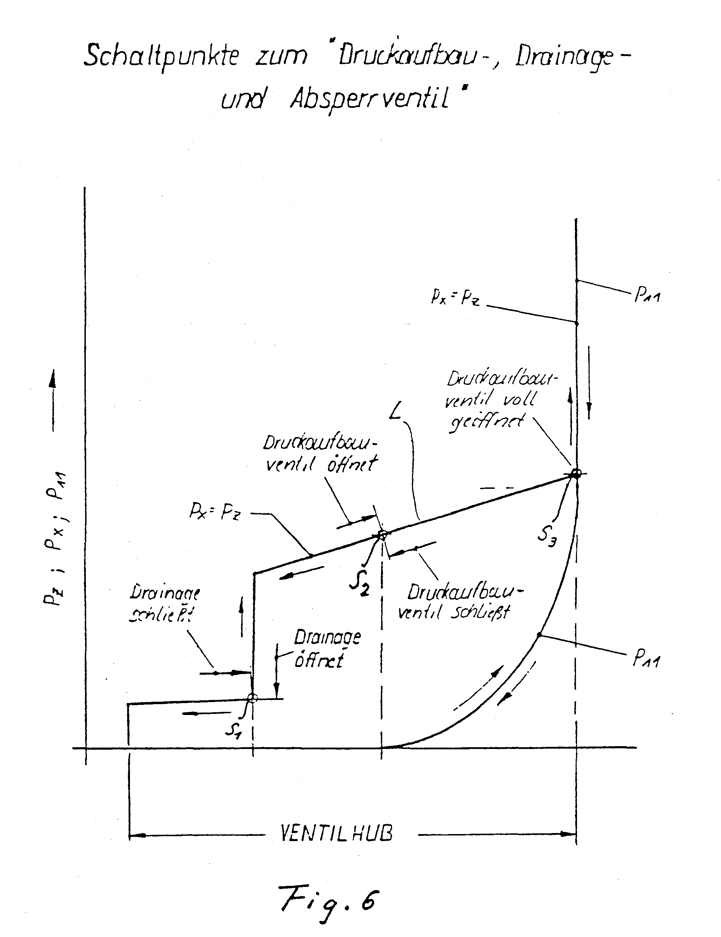

Im Diagramm nach Fig. 6 kennzeichnet der Linienzug L den Verlauf des Druckaufbaus ($P_x = P_z$) mit den wesentlichen Schaltpunkten $S_1$, $S_2$, $S_3$ des Druckaufbau-, Drainage- und Absperrventils nach Fig. 2 bezogen auf den gesamten Kolbenverstellweg (Ventilhub).

In Relation zur Ventilverstellung (Fig. 2) – jeweils von links nach rechts gesehen – hat also der erste Steuerkolben 22 im Punkt $S_1$ die Drainageabsperreinrichtung in der Ringkammer 39 verschlossen. Im Wege gemeinsamer Kolbenverstellung erfolgt danach die Ventilöffnung mittels der Brennstoffzuströmschlitze 47 im Punkte $S_2$ (Druckaufbauventil öffnet).

Im Punkt $S_3$ ist der von Durchströmschlitzen 47 bereitgestellte Gesamtdurchströmquerschnitt voll geöffnet. Man erkennt, daß ab dem Schaltpunkt $S_2$ der Druck $P_{11}$ in der Brennstoffversorgungsleitung 11 rasch ansteigt und im Punkt $S_3$ seinen Höchstwert erreicht, der = $P_z$ = $P_x$ ist. Der beim Abschalten des Triebwerks sich ausbildende Druckverlauf ist durch umgekehrte Pfeilrichtungen von $S_3$ über $S_2$ und $S_1$ repräsentiert. Es handelt sich dabei um den zuvor auf Seite 16 unter Punkt 1 schon behandelten «normalen» Abschalt- oder Abstellvorgang.

**Patentansprüche**

1. Druckaufbau-, Drainage- und Absperrventil für Gasturbinentriebwerke, das durch Kolbenverstellung im Wechsel zwischen einem vorgegebenen Steuerdruck und vorgegebener Federrückstellkraft die Brennstoffzufuhr zu mindestens einer Brennstoffeinspritzdüse in einer Brennkammer wahlweise freigibt oder absperrt und daß in der Absperrstellung den Rückfluß unverbrauchten Brennstoffes von der Brennstoffdüse in eine Drainageleitung herbeiführt, gekennzeichnet durch folgende Merkmale:

a) Innerhalb eines Ventilgehäuses (20, 21) sind ein erster und ein zweiter Steuerkolben (22, 23) gegen Rückstellfedern (25, 26) axial verschiebbar angeordnet, von denen der erste die Brennstoffzufuhr in eine Kammer (39) steuert und der zweite als hohlzylindrisches Führungs- und Absteuermittel für den unverbrauchten Brennstoff ausgebildet ist;

b) die Kammer (39) ist stets über eine Brennstoffversorgungsleitung (11) an die Brennstoffdüse angeschlossen;

c) innerhalb der Kammer (39) bilden einander zugekehrte Endflächen des ersten und zweiten Steuerkolbens (22, 23) eine Absperreinrichtung für den unverbrauchten Brennstoff;

d) in einer ersten Endstellung beider Steuerkolben (22, 23) ist die Brennstoffzufuhr in die Kammer (39) abgesperrt und die Absperreinrichtung voll geöffnet;

e) in einer ersten Kolbenverstellphase verschließt der gegen die zugehörige eine Rückstellfeder (25) verschobene erste Steuerkolben (22) zunächst die Absperreinrichtung;

f) erst in einer zweiten gemeinsamen Verstellphase des ersten und zweiten Steuerkolbens (22, 23) gegen beide Rückstellfedern (25, 26) wird die Brennstoffzufuhr freigegeben;

g) der für die Kolbenverstellung verantwortliche Steuerdruck (Px) wird getrennt von der Brennstoffzumessung (10', 44, 45", 47) an separater Stelle (46') auf die Kolbenfläche des ersten Steuerkolbens (22) aufgebracht.

2. Ventil nach Anspruch 1, dadurch gekennzeichnet, daß der erste Steuerkolben (22) mehrere über dem äußeren Umfang verteilt angeordnete Brennstoffzuströmschlitze (47) aufweist, die bei gemeinsamer Kolbenverstellung zunehmend gegen die Kammer (39) geöffnet sind.

3. Ventil nach Anspruch 1 oder 2, dadurch gekennzeichnet, daß die Brennstoffzuströmschlitze (47) in axialer Richtung verlaufend, nach oben offen und in der ersten Kolbenendstellung durch ein ventilgehäuseseitig radial vorspringendes Führungsabsatzstück (46) gegenüber der Ringkammer (39) gänzlich abgeschirmt sind und ferner mit einem stromauf des Absatzstückes (46) liegenden, die erste Rückstellfeder (25) enthaltenen Ringraum (24) für den seitlich zugemessenen Brennstoff in Verbindung stehen, wobei der Ringraum (24) zwischen Wandabschnitten des ersten Steuerkolbens (22) und des Ventilgehäuses (Teil 20) ausgebildet ist.

4. Ventil nach einem oder mehreren der Ansprüche 1 bis 3, dadurch gekennzeichnet, daß der erste Steuerkolben (22) auf einer zentralen, bei Kolbenverstellung mitgenommenen Welle (29) sitzt, die am stromabwärtigen Ende einen seitlich in die ringförmige Kammer (39) auskragenden, auf der Welle selbstjustierend verdrehbar angeordneten Ventilteller (33) aufweist, der mit einer Ventilsitzanschlagsfläche auf der einen Seite an einer entsprechenden Gegenfläche des vorn offenen Stirnendes des zweiten Steuerkolbens (23) zur Anlage bringbar ist und auf anderer Seite als dichtende Gegensitzfläche gegenüber einer Gehäuseanschlagsfläche (35) am Führungsabsatzstück (46) ausgebildet ist.

5. Ventil nach Anspruch 4, dadurch gekennzeichnet, daß die zentrale Welle (29) am stromabwärtigen Ende ein sich in Ventilachsrichtung verjüngendes Endstück (32) aufweist, das in eine entsprechend kegelförmige Endfläche (35') des zweiten Steuerkolbens (23) paßt, wobei das Endstück (32) auf der anderen Seite eine kegelförmig nach innen eingezogene Sitzfläche für den Ventilteller (33) bereitstellt, der (33) auf der anderen Seite wiederum an einer korrespondierenden, ebenfalls nach innen kegelförmig eingezogenen Gegensitzfläche des ersten Steuerkolbens (22) abstützbar ist.

6. Ventil nach einem oder mehreren der Ansprüche 1 bis 5, dadurch gekennzeichnet, daß das Ventilgehäuse aus einem vorderen (20) und einem hinteren Gehäusekörper (21) zusammengesetzt ist.

7. Ventil nach einem oder mehreren der Ansprüche 1 bis 6, dadurch gekennzeichnet, daß das stromaufwärtige Ende des zweiten Steuerkolbens (23) durch die radial abgekröpfte Endwand eines buchsenförmigen Endteils (34) des vorderen Gehäusekörpers (20) ragt, in welchem Endteil (34) auch die Ringkammer (39) ausgebildet ist.

8. Ventil nach einem oder mehreren der Ansprüche 1 bis 7, dadurch gekennzeichnet, daß die zweite Rückstellfeder (26) innerhalb eines stromabwärtigen Ringraums (27) angeordnet ist, der zwischen einem zylindrisch vorspringenden Ende des zweiten Steuerkolbens (23) und einer in axialer Richtung auskragenden Zylinderwand einer Kolbenanschlagsbuchse (28) auf der einen Seite und der zylindrischen Innenwand des hinteren Gehäusekörpers (21) auf der anderen Seite ausgebildet ist.

9. Ventil nach einem oder mehreren der Ansprüche 1 bis 8, dadurch gekennzeichnet, daß in der ersten gemeinsamen Kolbenendstellung bzw. Drainagestellung ein koaxialer Drainageabströmquerschnitt (37) zwischen den korrespondierenden Stirnflächen des zweiten Steuerkolbens (23) und der Kolbenendanschlagsbuchse (28) bereitgestellt wird, der (37) über den stromabwärtigen Ringraum (27) mit der Drainageleitung verbunden ist, und der (37) gleichzeitig bei maximal geöffnetem Brennstoffzuströmquerschnitt verschlossen ist.

10. Ventil nach Anspruch 9, dadurch gekennzeichnet, daß der zweite Steuerkolben (23) in einer vollen Drainageabströmquerschnitt (37) bereitstellenden ersten Endstellung – unter Wirkung der Rückstellkraft der Feder (26) – mit einem radial vorstehenden Absatz (36) an einer Gehäusegegenfläche aufsitzt.

11. Ventil nach einem oder mehreren der Ansprüche 1 bis 10, dadurch gekennzeichnet, daß beim Abstellen des Triebwerks zuerst die Brennstoffzuströmschlitze (47) abgesperrt und erst kurz danach die Ringkammer (39) über den Ventilteller (33) in Richtung auf den zweiten Steuerkolben (23) nach der Drainageleitung hin freigegeben wird.

12. Ventil nach einem oder mehreren der Ansprüche 1 bis 11, gekennzeichnet durch einen auf den vorderen und den hinteren Gehäusekörper (20, 21) aufgesetzten gemeinsamen Außengehäusekörper (43), der zwischen sich und beiden Gehäusekörpern (20, 21) mehrere aufeinanderfolgende, gegeneinander abgedichtete, ringförmige Verteilerräume (45, 44, 41, 42) einschließt, die der Reihe nach – jeweils für sich – mit einer stirnseitigen Gehäusekammer (46'), dem die erste Rückstellfeder (25) enthaltenden Ringraum (24), der Ringkammer (39) und mit dem stromabwärtigen Ringraum (27) fluidisch verbunden sind.

13. Ventil nach Anspruch 12, dadurch gekennzeichnet, daß das vordere Stirnende des vorderen Gehäusekörpers (20) mehrere gleichförmig über den Umfang verteilte Endausnehmungen (45') aufweist, die, vom Gehäusedeckel (43') umgrenzt, die fluidische Verbindung zwischen einem Verteilerraum (45) und der stirnseitigen Gehäusekammer (46') herstellen.

14. Ventil nach Anspruch 13, dadurch gekennzeichnet, daß der vordere (20) und der hintere Gehäusekörper (21) mit mehreren jeweils gleichförmig über dem Umfang verteilten Durchgangsbohrungen (45'', 38 bzw. 40) ausgestattet sind, über die die betreffenden Verteilerräume (44, 41 bzw. 42) jeweils für sich – der Reihe nach – mit dem Ringraum (24), mit der Ringkammer (39) bzw. mit dem stromabwärtigen Ringraum (27) fluidisch verbunden sind.

15. Ventil nach einem oder mehreren der Ansprüche 1 bis 14, dadurch gekennzeichnet, daß der der stirnseitigen Gehäusekammer (46') zugeordnete Verteilerraum (45) an eine Steuerdruckleitung (12), der der Ringkammer (24) zugeordnete Verteilerraum (44) an eine Brennstoffzumeßleitung (10'), der der Ringkammer (39) zugeordnete Verteilerraum (41) an die zu mindestens einer Brennstoffdüse (9) führende Brennstoffversorgungsleitung (11) und der mit dem stromabwärtigen Ringraum (27) kommunizierende Verteilerraum (42) an die Drainageleitung (Drainage F) angeschlossen sind.

16. Ventil nach Anspruch 9, dadurch gekennzeichnet, daß die Endanschlagbuchse (28) am offenen Anschlagende mehrere nach vorn offene, gleichförmig über dem Umfang verteilt angeordnete Leckflußaussparungen (70) aufweist.

17. Ventil nach einem oder mehreren der Ansprüche 1 bis 16, dadurch gekennzeichnet, daß der Druckaufbau für die Kolbenverstellung und Brennstoffsteuerung nach der Beziehung $P_x = P_z$ sowie als Funktion der Brennstoffdurchströmmenge und der Öffnungsfläche der Druckaufbau-, Drainage- und Absperrventile entsprechend der Zuordnung der Federkennlinien beider Rückstellfedern (25, 26) sowie die wirksamen Kolbenflächen des ersten Steuerkolbens (22) in der Gehäusekammer(46') auf der einen und im Ringraum (24) auf der anderen Seite erfolgt, worin $P_x$ der in der Gehäusekammer (46') herrschende Steuerdruck, $P_z$ der Einspritzdruck (Leitung 10') ist.

18. Ventil nach einem oder mehreren der Ansprüche 1 bis 17, dadurch gekennzeichnet, daß die Kolbenverstellung nach einer vorgegebenen Beziehung zwischen dem Einspritzdruck ($P_z$), dem Steuerdruck ($P_x$) und dem Brennstoffdruck ($P_{11}$) in der Brennstoffversorgungsleitung (11) erfolgt.

19. Brennstoffsteuereinrichtung eines Gasturbinentriebwerkes unter Zuordnung eines Druckaufbau-, Drainage- und Absperrventils nach einem oder mehreren der Ansprüche 1 bis 18, dadurch gekennzeichnet, daß ein elektromagnetisch betätigtes Abschaltventil (5) vorgesehen ist, das über eine Leitung (13), mit zwischengeschalteter Drossel oder Blende (6), an eine Brennstoffzumeßleitung (10') angeschlossen ist, über welche der mittels einer motorisch gesteuerten Brennstoffzumeßeinheit (2) abgesteuerte Brennstoff dem Ventil zuführbar ist, wobei die eine Leitung (13) mit einer zum Ventileingang geführten Steuerdruckleitung (12) verbunden ist, in der eine weitere Drossel oder Blende (7) angeordnet ist.

20. Einrichtung nach Anspruch 19, dadurch gekennzeichnet, daß ein Differenzdruckventil (3) mittels einer Membran (63) einerseits zwischen dem Ausgang einer Brennstoffpumpe (1) und dem Eingang der Brennstoffzumeßeinheit (2) und andererseits – hinter der einen Blende (6) sowie vor der anderen Blende (7) – zugleich an die Steuerdruckleitung (12) und an die zum Abschaltventil (5) führende eine Leitung (13) angeschlossen ist.

21. Einrichtung nach Anspruch 19 und 20, dadurch gekennzeichnet, daß das elektromagnetische Abschaltventil (5) und das Differenzdruckkonstanthaltungsventil (3) – bzw. Δp-Ventil zwecks Rückführung überschüssiger Brennstoffmengen (R', R) in den Tankbehälter als Folge eines beim Abstellen des Triebwerks verursachten Druckabfalls ausgebildet sind.

## Claims

1. Pressure build-up, drainage and stop valve for gas turbine engines, which valve, by moving a piston and alternating between a specified control pressure and specified spring restoring force, alternatively releases or cuts off the fuel supply to at least one fuel injection nozzle in a combustion chamber, and which, in the cut-off position, brings about the backflow of unused fuel from the fuel nozzle into a drainage line, characterised by the following features:

a) Inside a valve housing (20, 21) are a first and a second control piston (22, 23) arranged against restoring springs (25, 26) and in such a way that they can move axially, the first of which controls the fuel feed into a chamber (39) and the second of which is designed as a hollow cylindrical means of leading and directing away the unused fuel;

b) the chamber (39) is always connected by way of a fuel supply line (11) to the fuel nozzle;

c) inside the chamber (39) end faces, facing each other, of the first and second control pistons (22, 23) form a cut-off apparatus for the unused fuel;

d) in a first end position of both control pistons (22, 23), the fuel feed is stopped from entering the chamber (39) and the cut-off apparatus is fully opened;

e) in a first phase of piston movement, the first control piston (22), thrust against the one restoring spring (25) accompanying it, closes the cut-off apparatus in the first instance;

f) only in a second common phase of movement of the first and second control pistons (22, 23) against both restoring springs (25, 26) is the fuel feed released;

g) the control pressure (Px) responsible for the piston movement is applied, separately from the fuel metering (10', 44, 45'', 47), at a separate point (46') on the piston surface of the first control piston (22).

2. Valve according to claim 1, characterised in that the first control piston (22) has several fuel afflux grooves (47) distributed over the outer perimeter which, during common piston movement, are opened increasingly towards the chamber (39).

3. Valve according to claim 1 or 2, characterised in that the fuel afflux grooves (47) run in the axial direction, open upwards and in the first piston end position are completely screened, by means of a radially projecting guide bushing (46) on the side of the valve housing, from the annular chamber (39), and furthermore that the grooves (47) are connected with an annular space (24) for the fuel metered from the side, which is situated upstream of the bushing (46) and contains the first restoring spring (25), the annular space (24) being formed between wall sections of the first control piston (22) and of the valve housing (part 20).

4. Valve according to one or more of claims 1 to 3, characterised in that the first control piston (22) sits on a central shaft (29) which is carried along with the piston movement, and which has at the downstream end a valve disk (33) jutting sideways into the ring-shaped chamber (39) and arranged on the shaft in such a way that it is self-adjusting and can be rotated, which valve disk (33) can be brought into abutment, with a valve seating stop face on the one side, against a corresponding counter face of the forward end, open at the front, of the second control piston (23), and is formed on the other side as a sealing counter seating face opposite a housing stop face (35) on the guide bushing (46).

5. Valve according to claim 4, characterised in that the central shaft (29) has at the downstream end an end section (32) tapering in the direction of the valve axis, which section fits into a correspondingly tapered end face (35') of the second control piston (23), the end section (32) providing an inward-tapering seating on the other side for the valve disk (33), which (33), on the other side, can in turn be supported against a corresponding counter seating, likewise tapering inward, of the first control piston (22).

6. Valve according to one or more of claims 1 to 5, characterised in that the valve housing is composed of a front (20) and a back housing body (21).

7. Valve according to one or more of claims 1 to 6, characterised in that the upstream end of the second control piston (23) projects through the end wall, bent radially at a right-angle, of an can-shaped end section (34) of the front housing body (20), within which end section (34) the annular chamber (39) is also formed.

8. Valve according to one or more of claims 1 to 7, characterised in that the second restoring spring (26) is arranged inside a downstream annular space (27) formed between a cylindrically protruding end of the second control piston (23) and a cylinder wall, jutting in axial direction, of a piston stop sleeve (28) on the one side, and the cylindrical inner wall of the back housing body (21) on the other side.

9. Valve according to one or more of claims 1 to 8, characterised in that in the first common piston end position or drainage position a co-axial drainage discharge cross-section (37) is provided between the corresponding forward faces of the second control piston (23) and of the piston end stop sleeve (28), which (37) is connected to the drainage line by way of the downstream annular space (27) and which (37) is closed simultaneously with the maximum opening of the fuel afflux cross-section.

10. Valve according to claim 9, characterised in that the second control piston (23), in a first end position providing full drainage cross-section (37) – due to the action of the restoring force of the spring (26) – rests with a radially projecting ledge (36) against a housing counter face.

11. Valve according to one or more of claims 1 to 10, characterised in that when the engine is switched off, first the fuel afflux grooves (47) are shut off and only shortly after that the annular chamber (39) is opened up by means of the valve disk (33) in the direction of the second control piston (23) out towards the drainage line.

12. Valve according to one or more of claims 1 to 11, characterised by a common outer housing body (43) placed on the front and back housing bodies (20, 21), which housing body (43) encloses between itself and both housing bodies (20, 21) several consecutive, annular distributing spaces (45, 44, 41, 42) sealed from each other which are linked by fluid, in order – independently in each case – with a housing chamber (46') situated on the forward side, the annular space (24) containing the first restoring spring (25), the annular chamber (39) and the downstream annular space (27).

13. Valve according to claim 12, characterised in that the front forward end of the front housing body (20) has several end recesses (45') uniformly distributed around the perimeter, which, limited by the housing cover (43'), produce the fluid link between one distributing space (45) and the housing chamber (46') situated on the forward side.

14. Valve according to claim 13, characterised in that the front (20) and the back housing body (21) are provided with several through-holes (45", 38 and 40 respectively), in each case uniformly distributed over the perimeter, by means of which the distributing spaces (44, 41 and 42 respectively) are, in order, linked by fluid – independently in each case – with the annular space (24), with the annular chamber (39) and with the downstream annular space (27) respectively.

15. Valve according to one or more of claims 1 to 14, characterised in that the distributing space (45) allocated to the housing chamber (46') on the forward side is connected to a control pressure line (12), the distributing space (44) allocated to the annular chamber (24) is connected to a fuel metering line (10'), the distributing space (4) allocated to the annular chamber (39) is connected to the fuel supply line (11) leading to at least one fuel nozzle (9) and the distributing space (42) communicating with the downstream annular space (27) is connected to the drainage line (drainage F).

16. Valve according to claim 9, characterised in that the end stop sleeve (28) has at the open stop end several leakage flux openings (70) arranged so that they are open to the front and distributed uniformly over the perimeter.

17. Claim according to one or more of claims 1 to 16, characterised in that the pressure build-up for the piston movement and fuel control ensues according to the relationship Px=Pz, as well as as a function of the volume of fuel flow and of the aperture area of the pressure build-up, drainage and stop valves according to the allocation of the curve of spring characteristics of the two restoring springs (25, 26) and of the effective piston surfaces of the first control piston (22) in the housing chamber (46') on the one side and in the annular space (24) on the other side, in which $P_x$ is the prevailing control pressure in the housing chamber (46') and $P_z$ is the injection pressure (line 10').

18. Valve according to one or more of claims 1 to 17, characterised in that the piston movement ensues according to a specified relationship between the injection pressure $(P_z)$, the control pressure $(P_x)$ and the fuel pressure $(P_{11})$ in the fuel supply line (11).

19. Fuel control apparatus of a gas turbine engine under the co-ordination of a pressure build-up, drainage and stop valve according to one or more of claims 1 to 18, characterised in that an electromagnetically operatet cut-off valve (5) is provided which is connected by means of a line (13) with interposed choke or restrictor (6) to a fuel metering line (10') by which the fuel directed away by means of a motor-controlled fuel metering unit (2) can be fed to the valve, the one line (13) being linked to a control pressure line (12) fed to the valve inlet, in which line (12) a further choke or restrictor (7) is arranged.

20. Apparatus according to claim 19, characterised in that a differential pressure valve (3) is connected, by means of a diaphragm (63), on the one hand between the outlet of a fuel pump (1) and the inlet of the fuel metering unit (2), and on the other hand – behind the one restrictor (6) and in front of the other restrictor (7) – simultaneously to the control pressure line (12) and to the one line (13) leading to the cut-off valve (5).

21. Apparatus according to claims 19 and 20, characterised in that the electromagnetic cut-off valve (5) and the differential pressure stabilising valve (3) or Δp-valve respectively are designed for the purpose of leading excess amounts of fuel (R', R) back into the tank container as a result of a falling-off of pressure caused when the engine is switched off.

**Revendications**

1. Soupape d'accumulation de pression, de purge et d'arrêt pour groupes de propulsion à turbine à gaz, délivrant ou arrêtant par déplacement de piston au choix l'alimentation de carburant à au moins un injecteur de carburant dans une chambre de combustion par alternance entre une pression de commande prédéterminée et une force de rappel élastique prédéterminée, et provoquant en position d'arrêt le retour du carburant inutilisé, depuis l'injecteur de carburant vers une conduite de purge, caractérisé par les propriétés suivantes:

a) Un premier et un deuxième piston (22, 23) sont disposés à l'intérieur d'un carter de soupape (20, 21), mobiles axialement contre des ressorts de rappel (25, 26), le premier commandant l'alimentation de carburant dans une chambre (39) et le deuxième étant réalisé sous forme de moyen cylindrique creux, de guidage et de commande d'évacuation, pour le carburant inutilisé;

b) la chambre (39) est constamment raccordée à l'injecteur de carburant par une conduite d'alimentation de carburant (11);

c) des faces d'extrémité du premier et du deuxième piston de commande (22, 23), tournées l'une vers l'autre, forment à l'intérieur de la chambre (39) un dispositif d'arrêt pour le carburant inutilisé;

d) dans une première position finale des deux pistons de commande (22, 23), l'alimentation de carburant dans la chambre (39) est arrêtée et le dispositif d'arrêt est complètement ouvert;

e) dans une première phase de déplacement de piston, le premier piston de commande (22) déplacé en s'opposant au ressort de rappel correspondant (25) obture d'abord le dispositif d'arrêt;

f) le carburant est délivré seulement dans une deuxième phase de déplacement commune du premier et du deuxième piston de commande (22, 23) s'opposant aux deux ressorts de rappel (25, 26);

g) la pression de commande (Px) responsable du déplacement du piston est appliquée sur la face de piston du premier piston de commande (22), en un emplacement séparé (46') séparément de l'apport dosé de carburant (10', 44, 45", 47).

2. Soupape selon la revendication 1, caractérisée en ce que le premier piston de commande (22) présente plusieurs fentes d'arrivée de carburant (47) disposées réparties sur la périphérie extérieure, ouvertes de manière croissant vers la chambre (39) lors du déplacement commun de piston.

3. Soupape selon la revendication 1 ou 2, caractérisée en ce que les fentes d'arrivée de carburant (47), qui sont ouvertes vers le haut, s'étendant en direction axiale et sont complètement isolées par rapport à la chambre annulaire (39) dans la première position finale du piston par une pièce de guidage en saillie (46) placée radialement en saillie côté carter de soupape, et sont en outre reliées à une espace annulaire (24) pour le carburant amené latéralement, espace placé en amont de la pièce en saillie (46) et contenant le premier ressort de rappel (25), l'espace annulaire (24) étant formé entre les segments de paroi du premier piston de commande (22) et du carter de soupape (partie 20).

4. Soupape selon une ou plusieurs des revendications 1 à 3, caractérisée en ce que le premier piston de commande (22) repose sur un arbre central (29), entraîné par le déplacement du piston, présentant à l'extrémité aval de l'écoulement, un plateau de soupape (33) radialement en saillie dans la chambre de forme annulaire (39), et disposé tournant et à ajustage automatique sur l'arbre, plateau susceptible d'être placé en appui sur un côté, avec une surface de butée de siège de soupape, sur une contre-surface correspondante de l'extrémité frontale ouverte vers l'avant du deuxième piston de commande (23) et formé de l'autre côté sous forme de contre-surface de siège d'étanchéité par rapport à une surface de butée de carter (35) sur la pièce de guidage saillante (46).

5. Soupape selon la revendication 4, caractérisée en ce que l'arbre central (29) présente à l'extrémité aval de l'écoulement, une pièce d'extrémité (32) se rétrécissant dans le sens de l'axe de soupape, s'ajustant dans une face d'extrémité (35') de forme conique correspondante du deuxième piston de commande (23), la pièce d'extrémité (32) fournissant sur l'autre côté une surface de siège de forme conique, enfoncée vers l'intérieur, pour le plateau de soupape (33), plateau (33) susceptible de s'appuyer de l'autre côté à nouveau sur une contre-surface de siège correspondant du premier piston de commande (22) également de forme conique, enfoncée vers l'intérieur.

6. Soupape selon une ou plusieurs des revendications 1 à 5, caractérisée en ce que le carter de soupape est composé d'un corps de carter avant (20) de d'un corps de carter arrière (21).

7. Soupape selon une ou plusieurs des revendications 1 à 6, caractérisée en ce que l'extrémité amont du deuxième piston de commande (23) fait saillie dans la paroi d'extrémité recourbée radialement d'une partie d'extrémité (34), en forme de douille, du corps de carter avant (20), la chambre annulaire (39) étant également réalisée dans cette partie d'extrémité (34).

8. Soupape selon une ou plusieurs des revendications 1 à 7, caractérisée en ce que le deuxième ressort de rappel (26) est disposé à l'intérieur d'un espace annulaire (27) aval, réalisée entre une extrémité faisant saillie de façon cylindrique du deuxième piston de commande (23) et une paroi cylindrique axialement en saillie d'une douille de butée de piston (28), sur l'un des côtés, et la paroi intérieure cylindrique du corps de carter intérieur (21) sur l'autre côté.

9. Soupape selon une ou plusieurs des revendications 1 à 8, caractérisée en ce qu'une section d'écoulement de purge coaxiale (37) est fournie dans la première piston finale commune de piston, respectivement dans la première position de purge et, entre les faces frontales correspondantes du deuxième piston de commande (23) et la douille de butée d'extrémité de piston (28), section (37) reliée à la conduite de purge, par l'espace annulaire (27) aval, et qui (37) est simultanément obturée lorsque la section d'alimentation en carburant est ouverte au maximum.

10. Soupape selon la revendication 9, caractérisée en ce que, dans une première position finale fournissant une pleine section d'écoulement de purge (37), le deuxième piston de commande (23) repose avec un décrochement (36) radialement en saillie – sous l'action de la force de rappel élastique du ressort (26) – sur une contre-surface du carter.

11. Soupape selon une ou plusieurs des revendications 1 à 10, caractérisée en ce que lors de l'arrêt du groupe de propulsion, les fentes d'arrivée de carburant sont d'abord obturées et que seulement peu après la chambre annulaire (39) est libérée par le plateau de soupape (33) en direction du deuxième piston de commande (23), vers la conduite de purge.

12. Soupape selon une ou plusieurs des revendications 1 à 11, caractérisée par un corps de carter extérieur (43) commun monté sur le corps de carter avant et sur le corps de carter arrière (20, 21), et qui comporte entre soi et lui-même les deux corps de carter (20, 21) plusieurs espaces annulaires de répartition (45, 44, 41, 42) successives, isolées de manière étanche les unes par rapport aux autres, qui sont reliées hydrauliquement reliées dans l'ordre – chaque fois individuellement – à une chambre de carter (46') côté frontal, à l'espace annulaire (24) contenant le premier ressort de rappel (25) et à l'espace annulaire aval (27).

13. Soupape selon la revendication 12, caractérisée en ce que l'extrémité frontale avant du corps de carter avant (20) présente plusieurs évidements d'extrémité (45') répartis régulièrement sur la périphérie, et établissant, en étant entourés par le couvercle de carter (43'), la liaison hydraulique entre un espace de répartition (45) et la chambre de carter (46') côté frontal.

14. Soupape selon la revendication 13, caractérisée en ce que le corps de carter avant (20) et le corps de carter arrière (21) sont munis de plusieurs alésages de passage (45", 38 respectivement 40) uniformément répartis sur la périphérie, par lesquels les espaces de répartition (44, 41 respectivement 42) concernées sont reliées hydrauliquement individuellement – dans l'ordre – à l'espace annulaire (24), à la chambre annulaire (39), et respectivement à l'espace annulaire aval (27).

15. Soupape selon une ou plusieurs des revendications 1 à 14, caractérisée en ce que l'espace de distribution (45) correspondant à la chambre de carter côté frontal (46') est raccordée à une conduite de pression de commande (12), l'espace de répartition (44) correspondant à la chambre annulaire (24) est reliée à une conduite d'apport dosé de carburant (10'), l'espace de répartition (41) correspondant à la chambre annulaire (39) est reliée à une conduite d'alimentation en carburant (11) menant à au moins un injecteur de carburant (9), et l'espace de répartition (42) communiquant avec l'espace annulaire aval (27) est reliée à la conduite de purge (purge F).

16. Soupape selon la revendication 9, caractérisée en ce que la douille de butée d'extrémité (28) présente à l'extrémité ouverte de butée plusieurs évidements d'écoulement de fuite (70) ouverts vers l'avant et répartis uniformément sur la périphérie.

17. Soupape selon une ou plusieurs des revendications 1 à 16, caractérisée en ce que l'établissement de la pression pour le réglage du piston et la commande du carburant s'effectue selon la relation $P_x = P_z$, ainsi qu'en fonction du débit traversant de carburant et de la surface d'ouverture de la soupape d'accumulation de pression, de purge et d'arrêt, en fonction de l'affectation des courbes caractéristiques élastiques des deux ressorts de rappel (25, 26), ainsi que des surfaces de piston efficaces du premier piston de commande (22) dans la chambre de carter (46') sur l'un des côtés et dans l'enceinte annulaire (24) sur l'autre côté et dans l'enceinte annulaire (24) sur l'autre côté, relation dans laquelle $P_x$ est la pression de commande régnant dans la chambre de carter (46'), $P_z$ est la pression d'injection (conduite 10').

18. Soupape selon une ou plusieurs des revendications 1 à 17, caractérisée en ce que le réglage de piston s'effectue selon une relation donnée entre la pression d'injection ($P_z$), la pression de commande ($P_x$) et la pression de carburant (P11) dans la conduite d'alimentation en carburant (11).

19. Dispositif de commande de carburant d'un groupe de propulsion à turbine à gaz auquel est affecté une soupape d'accumulation de pression, de purge et d'arrêt, selon une ou plusieurs des revendications 1 à 18, caractérisé en ce qu'est prévue une soupape de déconnexion (5) actionnée électromagnétiquement, raccordée par une conduite (13), contenant un étranglement ou un diaphragme (6) intercalé, à une conduite d'apport dosé de carburant (10') par laquelle le carburant délivré au moyen d'une unité de dosage de carburant (2) commandée par moteur est susceptible d'être amené à la soupape, l'une des conduites (13) étant reliée à une conduite de pression de commande (12) menée à l'entrée de la soupape, dans laquelle est disposée en autre étranglement ou diaphragme (7).

20. Dispositif selon la revendication 19, caractérisé en ce qu'une soupape à pression différentielle (3) est raccordée au moyen d'une membrane (63), d'une part entre la sortie d'une pompe à carburant (1) et l'entrée de l'unité de dosage de carburant (2) et d'autre part – derrière l'un des diaphragmes (6), ainsi que devant l'autre diaphragme (7) – à la fois à la conduite de pression de commande (12) et à la conduite (13) menant à la soupape de déconnexion (5).

21. Dispositif selon les revendications 19 et 20, caractérisé en ce que la soupape de déconnexion électromagnétique (5) et la soupape de maintien de la pression différentielle à une valeur constante (3) – respectivement soupape Dp, sont réalisées pour retourner les débits excédentaires de carburant (R, R') au réservoir, par suite d'une chute de pression provoquée lors de l'arrêt du groupe propulseur.

Fig. 1

Fig. 2

EP 0205160 B1

22

47

20

38

y

# Fig. 3

47

# Fig. 4

Fig. 5

Schaltpunkte zum "Druckaufbau-, Drainageund Absperrventil"

$p_x = p_z$    $P_{11}$

Druckaufbauventil voll
geöffnet

$L$

Druckaufbauventil öffnet

$p_x = p_z$

$S_3$

$S_2$

Druckaufbauventil schließt

Drainage
schließt

Drainage
öffnet

$P_{11}$

$S_1$

$P_z ; P_x ; P_{11}$

VENTIL HUB

Fig. 6

21